# EUROPEAN PATENT SPECIFICATION

(11) **EP 2 530 286 B1**
(45) Date of publication and mention of the grant of the patent: **29.07.2020**
(21) Application number: 12170210.4
(22) Date of filing: 31.05.2012
(51) Int. Cl.: F02D 31/00, F02D 41/24

(54) **Engine setting system**
Motoreinstellsystem
Système de réglage d'un moteur

(30) Priority: 03.06.2011 JP 2011125088
(43) Date of publication of application: 05.12.2012
(73) Proprietor: Honda Motor Co., Ltd., Tokyo 107-8556 (JP)
(72) Inventor: Sakai, Shigeto, Wako-shi, Saitama 351-0193 (JP); Okoshi, Satoru, Wako-shi, Saitama 351-0193 (JP); Machida, Kenichi, Wako-shi, Saitama 351-0193 (JP); Tsuyuguchi, Makoto, Wako-shi, Saitama 351-0193 (JP)
(74) Representative: Dehns

(56) References cited:
- WO-A1-2004/048762
- GB-A- 2 287 329
- US-A- 4 903 660
- US-A- 5 463 993
- US-A1- 2005 092 291
- US-A1- 2010 076 669
- Etas Gmbh: "Measurement, ECU Calibration, and Diagnostics Development Solutions for Automotive Embedded Systems", , 1 June 2009 (2009-06-01), pages 1-3, XP55039816, Retrieved from the Internet: URL:http://www.etas.com/dlc_tmp/82bd61d27a b6ca983cd51182a5831e42_1349179145/mcd_over view_2009_en.pdf [retrieved on 2012-10-02]

## Description

The present invention relates to an engine setting system where a control device on a vehicle side which controls driving of an engine and an external device are communicably connected to each other so that an engine control variable of the control device can be changed by the external device.

There has been disclosed a system where an ECU (control device) which is mounted on a vehicle is communicably connected to an external device so that an engine control variable such as a fuel injection amount or ignition timing which is controlled by the ECU can be changed by the external device (see JP-A-2010-71244). With such a system, setting of a control on the vehicle according to a user's preference can be performed.

However, in the above-mentioned conventional system, although a vehicle characteristic can be roughly changed along with a change in a fuel injection amount or ignition timing, in a race car where shortening of a travelling time is strongly required as in the case of race travelling or the like, for example, there is a case where the system is required to allow a user to acquire vehicle characteristics which he wants in more detail.

The present invention has been made in view of the above-mentioned circumstances, and it is an object of the present invention to provide an engine setting system by which a user can acquire a broader range of vehicle characteristics.

According to the invention, there is provided an engine setting system having the features of claim 1.

According to the invention, the control device is provided with the opening storing means in which the target opening of the bypass passage opening adjusting means corresponding to the rotational speed of the engine is stored, and the target opening is changeable by means of the setting means arranged outside the vehicle. Due to such a constitution, the opening of the bypass passage (that is, an intake amount) can be adjusted corresponding to the rotational speed of the engine, and engine brake feeling can be adjusted based on a change in the intake amount. Accordingly, the vehicle deceleration feeling from the high speed rotation and the vehicle deceleration feeling from the intermediate or low speed engine rotation can be changed based on the user preference, the user's habit at the time of travelling, or the like, and hence, the user can acquire a broader range of vehicle characteristics. Particularly, in a two-wheeled racing machine on which a 4-stroke engine is mounted, an engine brake when a throttle is off is large compared to the engine braking with a 2-stroke engine, thus giving strong deceleration feeling to the user. Accordingly, the advantageous effects are large for a user who changes his vehicle from a racing machine having a 2-stroke engine to a racing machine having a 4-stroke engine.

Further, drivability can be enhanced while preventing a drastic change in engine brake feeling.

The target opening is set with respect to at least two predetermined engine rotational speeds, including a first rotational speed and a second rotational speed, which are set in advance.

With this arrangement, it is sufficient to change the target opening at a limited number of engine rotational speeds and hence, the target opening changing operation can be performed easily.

The target opening in a rotational speed region between the first rotational speed and the second rotational speed is set by linear interpolation using the target openings corresponding to the first rotational speed and the second rotational speed.

Thus, it is possible to set a target opening which changes smoothly.

In a rotational speed region where the engine rotational speed is smaller than the first rotational speed, the target opening is set to correspond to the target opening at the first rotational speed, and in a rotational speed region where the engine rotational speed is larger than the second rotational speed, the target opening is set to correspond to the target opening at the second rotational speed.

With this arrangement, an amount of opening which meets the user's preference can be achieved over the whole rotational speed region.

The first rotational speed is set to be equal to or more than an idling rotational speed, and the second rotational speed is set to be larger than the first rotational speed, an upper limit value and a lower limit value are set with respect to the target opening, and a separation between the upper and lower limit values of the target opening which is changeable at the first rotational speed is set to be smaller than a separation between the upper and lower limit values of the target opening which is changeable at the second rotational speed.

With this arrangement, the opening at the first rotational speed (which is equal to or more than the idling rotational speed) becomes the opening at idling rotational speed and hence, by decreasing a separation between the upper and lower limit values of the changeable target opening, a greater than necessary change in setting can be suppressed, thus making the idling rotational speed stable.

Preferably, the second rotational speed is set to 8000 rotations or more.

With this arrangement, the deceleration feeling from high speed rotation can be changed and hence, the deceleration feeling can be set according to the user preference at the time of cornering travelling or the like.

A preferred embodiment of the invention will now be described by way of example only and with reference to the accompanying drawings, in which:
Fig. 1 is a block diagram showing the constitution of an engine setting system according to an embodiment of the present invention;
Fig. 2 is a side view of a motorcycle to which the engine setting system is applied;
Fig. 3 is a side view of an engine of the motorcycle;
Fig. 4 is a conceptual view for explaining inputting and outputting of data between an ECU and an external device which constitute the engine setting system;
Fig. 5(A) and 5(B) are views showing an example of a setting screen displayed on the external device;
Fig. 6 is a view showing an example of a setting screen for an idling control valve displayed on the external device; and
Fig. 7 is a flowchart for explaining processing of setting a drive amount of an idling control valve in the ECU.

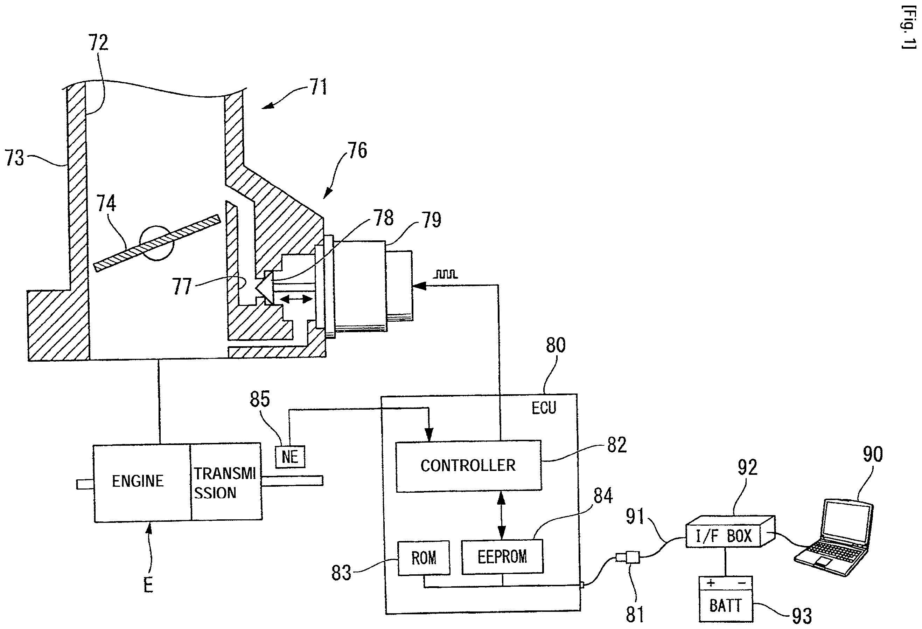

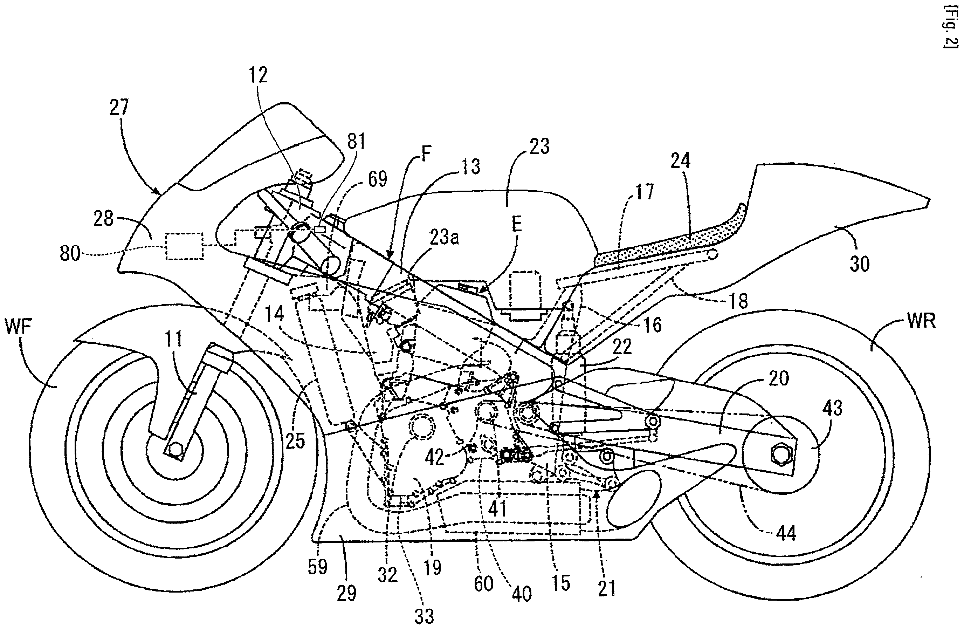

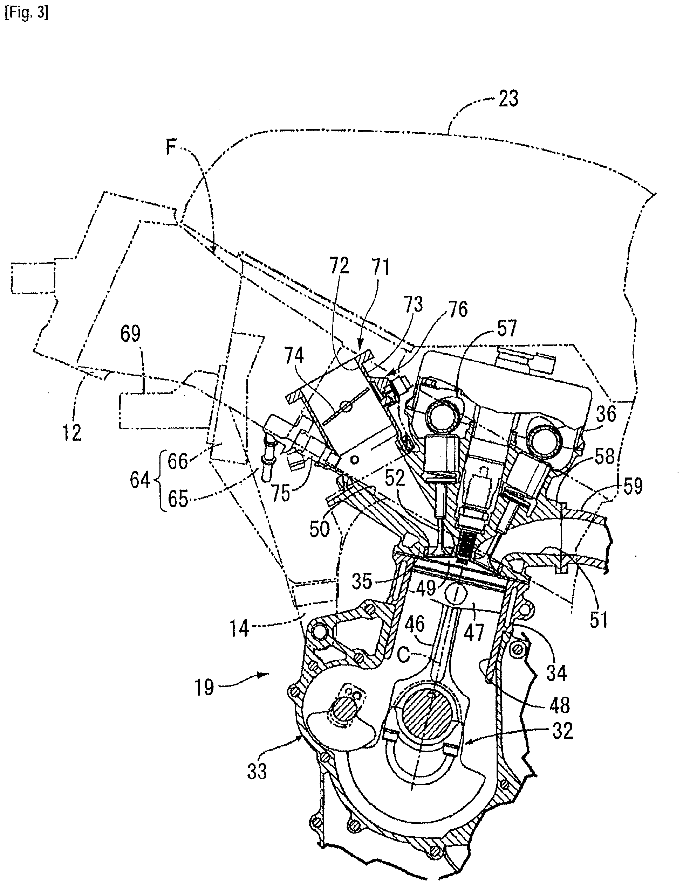

An embodiment of the present invention will now be explained. An engine setting system S according to this embodiment is, as shown in Fig. 1, constituted of an external device 90 which is arranged outside a vehicle and an ECU 80 which constitutes a control device mounted on the vehicle. Fig. 2 shows a motorcycle 1 provided with the ECU 80, and Fig. 3 shows an engine E which is mounted on the motorcycle 1. The engine setting system S is configured such that the external device 90 and the ECU 80 are communicably connected to each other so that an engine controlled variable of the ECU 80 can be changed. The control device mounted on the vehicle according to this embodiment in particular can preferably be adopted for use in a race car.

To explain the basic constitution of the motorcycle 1, as shown in Fig. 2, a vehicle body frame F of the motorcycle includes: a head pipe 12 which is arranged at a front end of the motorcycle 1 and steerably and pivotally supports a front fork 11 which pivotally supports a front wheel WF; a pair of left and right main frames 13 which extend rearwardly and downwardly from the head pipe 12; a hanger 14 which extends downwardly from front portions of the main frames 13; a pivot frame 15 which extends downwardly from rear portions of the main frames 13; a seat rail 17 which has a front end portion thereof supported on an upper end of a support strut 16 which is mounted on rear portions of the main frames 13 in an erected manner and extends rearwardly and upwardly; and rear stays 18 which connect the rear portions of the main frames 13 and a rear portion of the seat rail 17 to each other.

An engine body 19 of an internal combustion engine E which is arranged below the main frames 13 is supported by the rear portions of the main frames 13 of the vehicle body frame F, a lower portion of the hanger 14 and a lower portion of the pivot frame 15. Further, a front end portion of a swing arm 20 which pivotally supports a rear wheel WR driven by power generated by the internal combustion engine E on a rear end portion thereof is supported by the pivot frame 15 in a vertically swingable manner. A link 21 and a rear cushion unit 22 are arranged between the front portion of the swing arm 20 and the support strut 16 of the vehicle body frame F.

A fuel tank 23 which is arranged above the engine body 19 is mounted on the main frame 13, and a rider seat 24 which is arranged behind the fuel tank 23 is supported on the seat rail 17. A radiator 25 is arranged in front of the engine body 19, and the radiator 25 is supported on the vehicle body frame F and the engine body 19. The motorcycle 1 is a batteryless vehicle so that the motorcycle 1 has no battery.

A portion of the internal combustion engine E and a portion of the vehicle body frame F are covered with a vehicle body cover 27. The vehicle body cover 27 includes: a front cowl 28 which extends from a front side of the head pipe 12 to the rear portions of the main frames 13 and covers the radiator 25 and the internal combustion engine E from above; a pair of left and right side cowls 29 which are contiguously formed with rear portions of both sides of the front cowl 28 and cover a lower portion of the internal combustion engine E; and a rear cowl 30 which covers the seat rail 17.

To explain this embodiment in conjunction with Fig. 3, the engine body 19 of the internal combustion engine E is a 4-stroke single-cylinder engine having a displacement of 250 cc, and the motorcycle 1 having such a 4-stroke single-cylinder engine is a machine which belongs to the same category as a racing machine which has a 2-stroke single-cylinder engine having the displacement of 125 cc. Although the 4-stroke single-cylinder engine having the displacement of 250 cc and the 2-stroke single-cylinder engine having the displacement of 125 cc are substantially equal with respect to a torque and a horsepower generated by the engine, the 4-stroke single cylinder engine generates a larger engine braking than the 2-stroke single cylinder engine when a throttle is off.

The engine body 19 includes: a crankcase 33 which rotatably supports a crankshaft 32 having an axis extending in the widthwise direction of the vehicle body frame F; a cylinder 34 which is joined to an upper end of a front portion of the crankcase 33; a cylinder head 35 which is joined to an upper end of the cylinder 34; and a head cover 36 which is joined to an upper end of the cylinder head 35 thus constituting a single cylinder.

To explain this embodiment in conjunction with Fig. 2, a transmission case 40 which extends rearwardly is contiguously connected to the crankcase 33. A transmission (not shown in the drawing) which changes the rotational power from the crankshaft 32 with a change in speed is housed in the inside of the transmission case 40, and an output shaft 41 of the transmission projects from a left wall of the transmission case 40. A drive sprocket 42 is fixed to the output shaft 41, a driven sprocket 43 is fixed to an axle of the rear wheel WR, and an endless chain 44 extends between and is wound around the drive sprocket 42 and the driven sprocket 43.

To explain this embodiment in conjunction with Fig. 3, the cylinder 34 includes a cylinder bore 48 in which a piston 47 connected to the crankshaft 32 by way of a connecting rod 46 is slideably fitted, and an axis of the cylinder bore 48, that is, a cylinder axis C, is slightly inclined rearwardly and upwardly. That is, the engine body 19 is mounted on the vehicle body frame F in a state where the cylinder axis C is slightly rearwardly inclined.

A combustion chamber 49 which a top portion of the piston 47 faces is formed between the cylinder 34 and the cylinder head 35, an intake port 50 which is communicated with the combustion chamber 49 is formed in a front portion of the cylinder head 35, and an exhaust port 51 which is communicated with the combustion chamber 49 is formed in a rear portion of the cylinder head 35. An intake valve 52 which can allow or interrupt communication between the combustion chamber 49 and the intake port 50 is arranged in the cylinder head 35 in an openable/closable manner, and an exhaust valve 53 which can allow or interrupt communication between the combustion chamber 49 and the exhaust port 51 is also arranged in the cylinder head 35 in an openable/closable manner. The intake valve 52 and the exhaust valve 53 are driven by a valve gear 57 housed in an upper portion of the cylinder head 35.

An upstream end of an exhaust pipe 59 is connected to the exhaust port 51. As shown in Fig. 2, the exhaust pipe 59 is formed such that the exhaust pipe 59 is bent toward a left side of the engine body 19 from a rear portion of the cylinder head 35 and extends to a front side of the engine body 19, is downwardly bent from the front side of the engine body 19 and is routed below the crankcase 33. A downstream end of the exhaust pipe 59 is connected to an exhaust muffler 60 arranged below the transmission case 40.

To explain this embodiment in conjunction with Fig. 3, an intake box 64 is arranged in front of the cylinder head 35. The intake box 64 is constituted of a box body 65 which is formed into a box shape and a lid member 66 which is arranged on a front portion of the box body 65, and an air filter (not shown in the drawing) is sandwiched between the box body 65 and the lid member 66. An intake duct 69 which extends forwardly is integrally formed with the lid member 66, and a front end of the intake duct 69 is opened.

A throttle body 71 which guides air which has been purified by the air filter to an intake port 50 side is housed in a downstream side of the intake box 64 with the air filter sandwiched therebetween, and a downstream-side end portion of the throttle body 71 is connected to the intake port 50.

The throttle body 71 includes: a throttle body main part 73 in which an intake passage 72 is formed; a throttle valve 74 which is pivotally supported in the inside of the throttle body main part 73 and is constituted of a butterfly valve which opens and closes the intake passage 72; and a fuel injection valve 75 which injects fuel to the intake passage 72 on a downstream side of the throttle valve 74. The throttle body 71 also includes an idling control valve 76 which has a bypass passage formed so as to bypass the throttle valve 74 arranged in the intake passage 72.

The idling control valve 76 is provided for stabilizing an idling rotational speed by adjusting an intake air amount at the time of idling the engine E. In Fig. 1, the constitution of the idling control valve 76 is shown in detail. The idling control valve 76 includes a bypass passage 77 which is formed such that the bypass 77 communicates with a portion of the intake passage 72 upstream of the throttle valve 74 and a portion of the intake passage 72 downstream of the throttle valve 74 so as to bypass the throttle valve 74, and an open/close valve 78 which opens and closes the bypass passage 77. The open/close valve 78 is driven by a pulse motor 79 in an advanceable and retractable manner so as to adjust an opening of the bypass passage 77. By adjusting an intake air amount at the time of idling the engine E, it is also possible to set the degree of engine brake feeling.

The idling control valve 76 is connected to the ECU 80 and, as shown in Fig. 2, the ECU 80 is arranged inside the front cowl 28. The ECU 80 controls a fuel injection amount of the engine E, ignition timing, the driving of the idling control valve 76 and the like. The ECU 80 can be communicably connected to the external device 90 by way of a coupler 81 mounted on a front portion of the main frame 13, and the coupler 81 functions as an interface with the external device 90.

To explain this embodiment in conjunction with Fig. 1, the ECU 80 includes: a controller 82 which is constituted of a CPU (Central Processing Unit) or the like; a ROM (Read Only Memory) 83 which is a storage device; and an EEPROM (Electrically Erasable Programmable Read Only Memory) 84 which is an electrically rewritable storage device. Vehicle-type specific data for specifying a type of vehicle is stored in the ROM 83, and setting data such as a fuel injection amount, ignition timing and a driving amount (pulse amount) of the idling control valve 76 are stored in the EEPROM 84. In Fig. 1, symbol 85 indicates an engine rotational speed sensor which detects an engine rotation speed (rpm).

The engine setting system S is configured such that an input/output cable 91 connected to the coupler 81 is connected to an external interface box 92 so that the ECU 80 is connected to the external device 90 by way of the external interface box 92.

The external device 90 is constituted of a personal computer, and the external interface box 92 is provided to cope with a plurality of interfaces which differ from each other depending on a vehicle type. That is, the external device 90 is connected to the ECU arranged on a vehicle side by way of the external interface box 92 so that the external device 90 can be communicated with plural vehicle types. Further, a battery 93 is connected to the external interface box 92 so that electric power is supplied to the ECU 80. Due to such a constitution, sufficient electric power is supplied to the ECU 80 of the motorcycle 1 which is a batteryless vehicle.

In Fig. 1, besides the engine setting system S, an idling control valve drive system which is constituted of the idling control valve 76 and the ECU 80 is shown in the form of a block diagram. In the idling control valve drive system, the ECU 80 outputs pulse signals based on the setting data stored in the EEPROM 84 and controls the driving of the idling control valve 76. Although described later in detail, the setting data relating to a drive amount of the idling control valve 76 is data on a pulse amount (target opening) relating to the driving of the idling control valve 76 which is set with respect to an engine rotational speed.

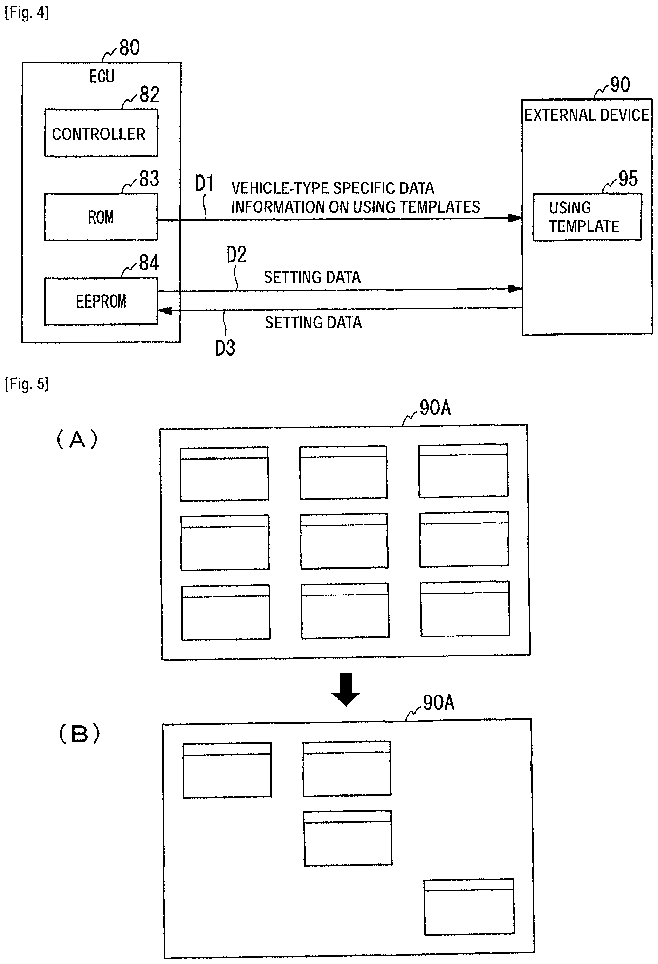

Fig. 4 is a conceptual view for explaining inputting and outputting of data when the communication is established between the ECU 80 and the external device 90 in the engine setting system S. When the communication is established between the ECU 80 and the external device 90, firstly, the vehicle type specific data stored in the ROM 83, the information on using templates and the setting data stored in the EEPROM 84 are inputted to the external device 90 from the ECU 80 (see arrows D1, D2).

When the vehicle type specific data, the information on using templates and the setting data have been inputted to the external device 90 from the vehicle side, based on this information, the external device 90 selects and displays required operation screens. The external device 90 stores using templates 95 used on the operation screens displayed on the display device in a storage device provided inside the external device 90, and plural kinds of using templates 95 are prepared for satisfying general-purpose use property. That is, the external device 90, based on the vehicle type specific data, the information on using templates and the setting data inputted from the vehicle side, selects and displays those using templates 95 which correspond to a vehicle type with which the external device 90 is communicably connected from among the using templates 95.

To explain specifically, Fig. 5 shows the operation screens displayed on a display device 90A of the external device 90. Fig. 5(A) shows a state where all operation screens which the external device 90 can display are displayed; the external device 90 displays, based on the information on using templates inputted from the vehicle side as described above, only the required operation screens as shown in Fig. 5(B). The inputted setting data is displayed on the using template screens in a state where the data is reflected.

The engine setting system S of this embodiment is configured such that a user can set an engine control variable using the operation screens displayed by the external device 90. After the user completes the setting, the setting data is outputted to the ECU 80 from the external device 90 (see arrow D3).

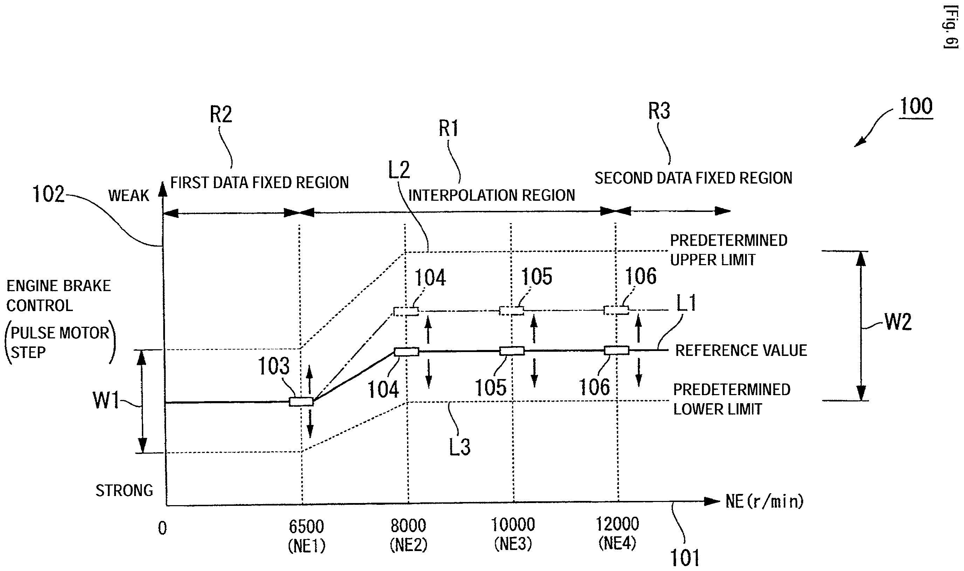

Fig. 6 shows a setting screen 100 relating to a driving amount of the idling control valve 76 on the using template screen displayed on the display device 90A of the external device 90. On the setting screen 100, the engine rotational speed (NE) is on the abscissa 101, and a pulse amount of the pulse motor 79 where an amount when the open/close valve 78 is in a closed state is set to 0 is on the ordinate 102. The pulse amount is set depending on the resolution of the pulse motor 79, and can be set to a value which falls within a range of 0 to 260 steps or the like, for example. The driving amount (pulse amount) of the idling control valve 76 is set corresponding to an engine rotational speed, and symbol L1 in the drawing indicates a preset reference value of a pulse amount.

Provided on the setting screen 100 are a first operation icon 103, a second operation icon 104, a third operation icon 105 and a fourth operation icon 106, by which a pulse amount at NE1 (6500 rotations per minute, rpm), a pulse amount at NE2 (8000 rpm), a pulse amount at NE3 (10000 rpm) and a pulse amount at NE4 (12000 rpm) can be changed respectively. The pulse amounts can be changed by moving the respective operation icons 103 to 106 in the vertical direction using a mouse or the like. On the setting screen 100, symbol L2 indicates a predetermined upper limit value of a pulse amount and symbol L3 indicates a predetermined lower limit value of a pulse amount, and the first operation icon 103, the second operation icon 104, the third operation icon 105 and the fourth operation icon 106 can be moved between the upper limit value L2 and the lower limit value L3 respectively.

With respect to the idling control valve 76, the larger a pulse amount of the pulse motor 79, the more the open/close valve 78 is opened, so that a rotational speed at the time of idling is increased and thus an engine brake effect is reduced. On the other hand, the smaller a pulse amount of the pulse motor 79, the less the open/close valve 78 is opened, so that a rotational speed at the time of idling is decreased and thus an engine brake effect is enhanced. Accordingly, by adjusting a pulse amount, that is, a target opening by moving the first operation icon 103, the second operation icon 104, the third operation icon 105 and the fourth operation icon 106 in the vertical direction, a force of an engine brake can be adjusted.

In the setting screen 100, a pulse amount between NE1 (6500 rpm) and NE2 (8000 rpm), a pulse amount between NE2 (8000 rpm) and NE3 (10000 rpm), and a pulse amount between NE3 (10000 rpm) and NE4 (12000 rpm) are set by linear interpolation using target openings corresponding to rotational speeds between the respective rotational speeds (in the drawing, R1 indicates the interpolation region). That is, in a region between NE1 and NE2, a pulse amount in the region between NE1 and NE2 is set based on a pulse amount set at NE1 and a pulse amount set at NE2. In a region between NE2 and NE3, a pulse amount in the region between NE2 and NE3 is set based on the pulse amount set at NE2 and a pulse amount set at NE3. In a region between NE3 and NE4, a pulse amount in the region between NE3 and NE4 is set based on the pulse amount set at NE3 and a pulse amount set at NE4.

Further, on the setting screen 100, a target opening corresponding to NE1 is set in a rotational speed region where the engine rotational speed is lower than NE1 (6500 rpm) (in the drawing, R2 indicates this first data fixed region), while the target opening corresponding to NE4 is set in a rotational speed region where the engine rotational speed is higher than NE4 (12000 rpm) (in the drawing, R3 indicates this second data fixed region). Further, in the motorcycle 1 according to this embodiment, a reference value of the target opening at NE1 is set such that an engine rotational speed at the time of idling becomes approximately 3000 rpm. NE1, which is a minimum rotational speed at which the target opening is changeable, is set to 6500 rpm (that is, equal to or more than an idling rotational speed), and NE2 to NE4 are set to rotational speeds larger than NE1. A separation between the upper and lower limit values of the target opening (pulse amount) which is changeable at NE1 (W1 in the drawing) is set smaller than a separation between the upper and lower limit values of the target opening which is changeable at NE2 to NE4 (W2 in the drawing).

In this embodiment, after a user sets the target opening of the idling control valve 76 using the above-mentioned operation screen 100, setting data relating to the pulse amount (target opening) is outputted to the ECU 80 from the external device 90.

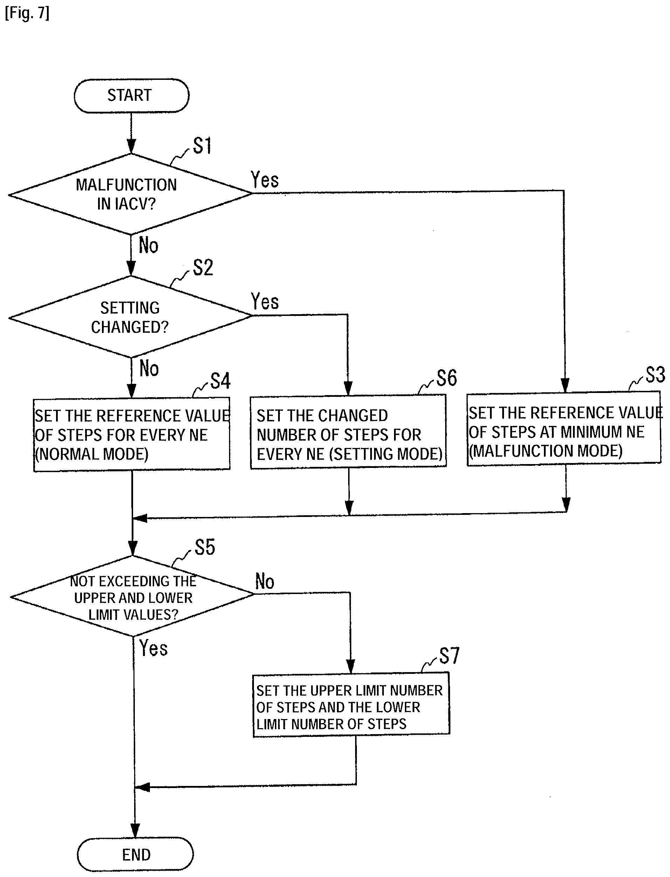

Fig. 7 is a flowchart for explaining the process for setting the target opening of the idling control valve 76 performed by the ECU 80 when the setting data is inputted into the ECU 80. The ECU 80 performs processing as follows. In the drawing, the idling control valve 76 is expressed as IACV.

In step S1, the ECU 80 detects whether or not the idling control valve 76 has a malfunction. If the idling control valve 76 does not have a malfunction, the processing advances to step S2, but if the idling control valve 76 has a malfunction, the processing advances to step S3.

In step S2, the ECU 80 compares the setting data outputted from the external device 90 with a reference value stored in the ECU 80, and determines whether or not the setting data has changed. The reference value is substantially equal to the reference value L1 displayed on the above-mentioned setting screen 100. When it is determined that the setting data has not changed in step S2, the processing advances to step S4 where the ECU 80 sets the reference value, and then the processing advances to step S5. On the other hand, when it is determined that the setting data has changed in step S2, the processing advances to step S6 where the changed setting data is changed for every predetermined engine rotational speed (that is, NE1 to NE4), and the processing then advances to step S5.

In step S3, which is a step taken when it is determined that the idling control valve 76 has a malfunction in step S1, the ECU 80 sets a minimum rotational speed, that is, a reference value at the above-mentioned NE1 in all rotational speed regions, and the processing advances to step S5. In step S3, processing where the idling control valve 76 is completely closed may be performed, or setting data dedicated to a malfunction mode which is set separately from the above-mentioned setting data may be set.

In step S5, the ECU 80 determines whether or not the setting data which is set in step S4, step S6 or step S3 goes beyond upper or lower limit values (values substantially equal to the above-mentioned L2, L3). If it is determined that the setting data does not go beyond the upper or lower limit values, the processing is finished. On the other hand, if it is determined that the setting data goes beyond the upper or lower limit values in step S5, then in step S7, the ECU 80 sets an upper limit value or a lower limit value with respect to the target opening which goes beyond the upper limit value or the lower limit value, and the processing is finished.

As has been explained heretofore, in the engine setting system S of this embodiment, the ECU 80 can adjust the target opening of the idling control valve 76 corresponding to the rotational speed of the engine E, and includes the EEPROM 84 in which the target opening is stored. Further, the engine setting system S is configured such that the target opening is changeable by the external device 90 arranged outside the vehicle. With such a constitution, the opening of the bypass passage 77, and thus an intake amount, can be adjusted corresponding to the rotational speed of the engine E, and engine brake feeling can be adjusted based on a change in the intake amount. Accordingly, the deceleration feeling from high speed rotation and the deceleration feeling of the vehicle from intermediate or low speed engine rotation can be changed based on the user preference or the user's habit at the time of travelling or the like and hence, the user can achieve a broader range of vehicle characteristics.

Further, in the above-mentioned engine setting system S, the upper limit value L2 and the lower limit value L3 are set with respect to the changeable target opening, and the target opening can be set within a range from the upper limit value L2 to the lower limit value L3. Accordingly, drivability can be enhanced while preventing a drastic change in engine brake feeling.

Further, in the above-mentioned engine setting system S, the changeable target opening is set with respect to predetermined engine rotational speeds (NE1 to NE4) which are set in advance. Accordingly, it is sufficient to change the target opening at a limited number of engine rotational speeds and hence, the target opening changing operation can be performed easily.

Further, in the above-mentioned engine setting system S, the target opening in the rotational speed region between the respective engine rotational speeds NE1 to NE4 is set by linear interpolation and hence, the target opening which smoothly changes can be set.

Further, in the above-mentioned engine setting system S, the target opening corresponding to NE1 (6500 rpm) is set in the rotational speed region where the engine rotational speed is less than NE1 (6500 rpm), and the target opening corresponding to NE4 (12000 rpm) is set in the rotational speed region where an engine rotational speed is greater than NE4 (12000 rpm). Accordingly, opening which meets the user preference can be reflected over the whole rotational speed region.

Further, in the above-mentioned engine setting system S, NE1 (6500 rpm), which is the minimum rotational speed out of the rotational speeds at which the target opening is changeable, is set to a rotational speed equal to or more than an idling rotational speed (3000 rpm), and NE2 (8000 rpm) is set to a rotational speed larger than NE1, and a separation between upper and lower limit values of the target opening which is changeable at NE1 is set to be smaller than a separation between upper and lower limit values of the target opening which is changeable at NE2 to NE4. Accordingly, the target opening at NE1 which is equal to or more than the idling rotational speed becomes the target opening at the time of idling rotational speed and hence, by decreasing the separation between upper and lower limit values of the changeable target opening, a greater than necessary change in setting can be suppressed thus making the idling rotational speed stable.

Still further, in the above-mentioned engine setting system S, the engine rotational speed is set to 8000 rpm or more at each from NE2 to NE4. Accordingly, the deceleration feeling from a high speed rotation can be changed and hence, the deceleration feeling can be set according to the user preference at the time of cornering or the like.

In the above-mentioned embodiment, the bypass passage opening adjusting means is provided in the ECU 80, and the bypass passage opening adjusting means can be realized such that a controller 82 executes a control program stored in the ROM in a developed manner. Here, the opening storing means corresponds to the EEPROM 84.

Although a preferred embodiment of the present invention has been explained heretofore, the present invention is not limited to the above-mentioned embodiment. For example, although the explanation has been made with respect to an engine setting system where the EEPROM is used as the opening storing means, other storage mediums may be used as the opening storing means. Further, the engine rotational speeds at which the target opening can be changed may be rotational speeds other than the above-mentioned rotational speeds. Further, although the rotational speed at which the target opening is changeable is set at four rotational speed positions (NE1 to NE4) in this embodiment, it is possible for the target opening to be changeable at fewer than four rotational speed positions or at more than four rotational speed positions.

## Claims

1. An engine setting system comprising a vehicle, a setting means (90, 95) arranged outside the vehicle, and a control device (80) mounted on the vehicle which controls driving of a vehicle engine, wherein the setting means (90, 95) and the control device (80) can be communicably connected to each other so that an engine control variable stored in the control device (80) is changeable by the setting means (90, 95), wherein:
the vehicle is a motorcycle without a battery;
wherein the engine setting system is configured such that an input-output cable (91) can be connected to a coupler (81) of the control device (80) and to an external interface box (92) so that the control device (80) is connected to the setting means (90, 95) by way of the external interface box (92); and
wherein a battery (93) is connected to the external interface box so that electric power can be supplied to the control device (80);
**characterised in that** the control device (80) comprises: a bypass passage opening adjusting means which adjusts opening of a bypass passage (77) which bypasses a throttle valve (74) arranged in an intake passage (72) connected to the engine based on a rotational speed of the engine; and an opening storing means which stores target opening of the bypass passage opening adjusting means corresponding to the rotational speed of the engine;
**in that** the setting means (90, 95) is capable of changing the target opening stored in the opening storing means; and
**in that** the target opening can be set by a user of the vehicle via the external interface box between an upper limit value (L2) and a lower limit value (L3);
wherein the target opening is set with respect to at least two predetermined engine rotational speeds, including a first rotational speed and a second rotational speed, which are set in advance;
wherein the target opening in a rotational speed region between the first rotational speed and the second rotational speed is set by linear interpolation using the target openings corresponding to the first rotational speed and the second rotational speed;
wherein, in a rotational speed region where the engine rotational speed is smaller than the first rotational speed, the target opening is set to correspond to the target opening at the first rotational speed, and in a rotational speed region where the engine rotational speed is larger than the second rotational speed, the target opening is set to correspond to the target opening at the second rotational speed; and
wherein the first rotational speed is set to be equal to or more than an idling rotational speed, and the second rotational speed is set to be larger than the first rotational speed, and
a separation between the upper and lower limit values of the target opening which is changeable at the first rotational speed is set to be smaller than a separation between the upper and lower limit values of the target opening which is changeable at the second rotational speed.

2. The engine setting system according to claim 1, wherein the second rotational speed is set to 8000 rotations or more.

## Patentansprüche

1. Motoreinstellungssystem, das ein Fahrzeug, ein Einstellungsmittel (90, 95), das außerhalb des Fahrzeugs angeordnet ist, und eine an dem Fahrzeug montierte Regelungsvorrichtung (80), die Antrieb eines Fahrzeugmotors regelt, umfasst, wobei das Einstellungsmittel (90, 95) und die Regelungsvorrichtung (80) kommunizierend miteinander verbunden sein können, sodass eine Motorregelungsvariable, die in der Regelungsvorrichtung (80) gespeichert ist, durch das Einstellungsmittel (90, 95) änderbar ist, wobei:
das Fahrzeug ein Motorrad ohne eine Batterie ist;
wobei das Motoreinstellungssystem so konfiguriert ist, dass ein Eingangs- /Ausgangkabel (91) mit einem Koppler (81) der Regelungsvorrichtung (80) und mit einer äußeren Schnittstellenbox (92) verbunden werden kann, sodass die Regelungsvorrichtung (80) mit dem Einstellungsmittel (90, 95) mittels der äußeren Schnittstellenbox (92) verbunden ist; und
wobei eine Batterie (93) mit der äußeren Schnittstellenbox verbunden ist, sodass elektrischer Strom an die Regelungsvorrichtung (80) zugeführt werden kann;
**dadurch gekennzeichnet, dass** die Regelungsvorrichtung (80) umfasst: ein Umleitungsdurchlassöffnungsanpassungsmittel, das Öffnung eines Umleitungsdurchlasses (77), der ein Drosselventil (74) umgeht, das in einem Einlassdurchlass (72) angeordnet ist, der mit dem Motor verbunden ist, basierend auf einer Drehzahl des Motors anpasst; und ein Öffnungsspeichermittel, das Zielöffnung des Umleitungsdurchlassöffnungsanpassungsmittels entsprechend der Drehzahl des Motors speichert;
dadurch, dass das Einstellungsmittel (90, 95) im Stande ist, die Zielöffnung zu ändern, die in dem Öffnungsspeichermittel gespeichert ist; und
dadurch, dass die Zielöffnung durch einen Benutzer des Fahrzeugs über die äußere Schnittstellenbox zwischen einem oberen Grenzwert (L2) und einem unteren Grenzwert (L3) eingestellt sein kann;
wobei die Zielöffnung in Bezug auf mindestens zwei vorgegebene Motordrehzahlen eingestellt ist, beinhaltend eine erste Drehzahl und eine zweite Drehzahl, die im Voraus eingestellt sind;
wobei die Zielöffnung in einem Drehzahlbereich zwischen der ersten Drehzahl und der zweiten Drehzahl durch lineare Interpolation unter Verwendung der Zielöffnungen entsprechend der ersten Drehzahl und der zweiten Drehzahl eingestellt ist;
wobei in einem Drehzahlbereich, wo die Motordrehzahl kleiner als die erste Drehzahl ist, die Zielöffnung eingestellt ist, der Zielöffnung bei der ersten Drehzahl zu entsprechen und in einem Drehzahlbereich, wo die Motordrehzahl größer als die zweite Drehzahl ist, die Zielöffnung eingestellt ist, der Zielöffnung bei der zweiten Drehzahl zu entsprechen; und
wobei die erste Drehzahl eingestellt ist, gleich oder mehr als eine Leerlaufdrehzahl zu sein und die zweite Drehzahl eingestellt ist, größer als die erste Drehzahl zu sein und
eine Trennung zwischen dem oberen und unteren Grenzwert der Zielöffnung, die bei der ersten Drehgeschwindigkeit änderbar ist, eingestellt ist, kleiner als eine Trennung zwischen dem oberen und unteren Grenzwert der Zielöffnung zu sein, die bei der zweiten Drehzahl änderbar ist.

2. Motoreinstellungssystem nach Anspruch 1, wobei die zweite Drehzahl auf 8000 Umdrehungen oder mehr eingestellt ist.

## Revendications

1. Système de réglage de moteur comprenant un véhicule, un moyen de réglage (90, 95) agencé à l'extérieur du véhicule, et un dispositif de commande (80) monté sur le véhicule qui commande l'entraînement d'un moteur de véhicule, dans lequel le moyen de réglage (90, 95) et le dispositif de commande (80) peuvent être reliés l'un à l'autre de manière à pouvoir communiquer afin qu'une variable de commande de moteur stockée dans le dispositif de commande (80) puisse être changée par le moyen de réglage (90, 95), dans lequel :
le véhicule est une motocyclette sans batterie ;
dans lequel le système de réglage de moteur est configuré de sorte qu'un câble d'entrée-sortie (91) puisse être relié à un coupleur (81) du dispositif de commande (80) et à un boîtier d'interface externe (92) afin que le dispositif de commande (80) soit relié au moyen de réglage (90, 95) par le biais du boîtier d'interface externe (92) ; et
dans lequel une batterie (93) est reliée au boîtier d'interface externe afin qu'une énergie électrique puisse être fournie au dispositif de commande (80) ;
**caractérisé en ce que** le dispositif de commande (80) comprend : un moyen d'ajustement d'ouverture de passage de contournement qui ajuste une ouverture d'un passage de contournement (77) qui contourne un papillon des gaz (74) agencé dans un passage d'admission (72) relié au moteur sur la base d'une vitesse de rotation du moteur ; et un moyen de stockage d'ouverture qui stocke une ouverture cible du moyen d'ajustement d'ouverture de passage de contournement correspondant à la vitesse de rotation du moteur ;
**en ce que** le moyen de réglage (90, 95) est capable de changer l'ouverture cible stockée dans le moyen de stockage d'ouverture ; et
**en ce que** l'ouverture cible peut être réglée par un utilisateur du véhicule par l'intermédiaire du boîtier d'interface externe entre une valeur de limite supérieure (L2) et une valeur de limite inférieure (L3) ;
dans lequel l'ouverture cible est réglée par rapport à au moins deux vitesses de rotation de moteur prédéterminées, incluant une première vitesse de rotation et une seconde vitesse de rotation, qui sont réglées à l'avance ;
dans lequel l'ouverture cible dans une région de vitesse de rotation entre la première vitesse de rotation et la seconde vitesse de rotation est réglée par interpolation linéaire en utilisant les ouvertures cible correspondant à la première vitesse de rotation et à la seconde vitesse de rotation ;
dans lequel, dans une région de vitesse de rotation dans laquelle la vitesse de rotation de moteur est inférieure à la première vitesse de rotation, l'ouverture cible est réglée pour correspondre à l'ouverture cible à la première vitesse de rotation, et, dans une région de vitesse de rotation où la vitesse de rotation de moteur est supérieure à la seconde vitesse de rotation, l'ouverture cible est réglée pour correspondre à l'ouverture cible à la seconde vitesse de rotation ; et
dans lequel la première vitesse de rotation est réglée pour être égale ou supérieure à une vitesse de rotation au ralenti, et la seconde vitesse de rotation est réglée pour être supérieure à la première vitesse de rotation, et
une séparation entre les valeurs de limite supérieure et inférieure de l'ouverture cible qui est peut être changée à la première vitesse de rotation est réglée pour être inférieure à une séparation entre les valeurs de limite supérieure et inférieure de l'ouverture cible qui peut être changée à la seconde vitesse de rotation.

2. Système de réglage de moteur selon la revendication 1, dans lequel la seconde vitesse de rotation est réglée à 8 000 rotations ou plus.
